# EUROPEAN PATENT APPLICATION

(11) **EP 1 764 676 A1**
(43) Date of publication of application: **21.03.2007**
(21) Application number: 06007385.5
(22) Date of filing: 07.04.2006
(51) Int. Cl.: G06F 3/033, H04M 1/247, H04M 1/725

(54) **Method for controlling display of image according to movement of mobile terminal**

(30) Priority: 15.09.2005 KR 20050086368
(71) Applicant: Samsung Electronics Co., Ltd., Yeongtong-gu Suwon-si, Gyeonggi-do (KR)
(72) Inventor: Oh, Sang-Gi, Yeongtong-gu Suwon-si Gyeonggi-do (KR); Lee, Jae-Ser, Yeongtong-gu Suwon-si Gyeonggi-do (KR)
(74) Representative: Lang, Johannes

(57) **Abstract**

Disclosed is a method for controlling the display of an image according to the movement of a mobile terminal, which includes an image enlargement/reduction, image search and display of a portion of an image according to the movement of the mobile terminal. The method employs the steps of detecting a movement of the mobile terminal during display of an image, determining whether a predetermined period of time has elapsed after detection of the movement, enlarging/reducing the image or searching images stored in the mobile terminal according to the direction of movement of the mobile tenninal, if another movement is detected before elapse of the predetennined period of time, and displaying a portion of the image selected according to the direction of movement of the mobile terminal, if another movement is not detected before elapse of the predetermined period of time.

## Description

### BACKGROUND OF THE INVENTION

### Field of the Invention:

The present invention relates to a method for controlling the display of an image according to the movement of a mobile terminal. More particularly, the present invention relates to a method for enlarging/reducing the size of a displayed image, searching images, or selecting and displaying a specific portion of an image according to the movement of a mobile terminal.

### Description of the Related Art:

Mobile communication terminals are becoming more integrated than existing mobile telephones for voice communication in order to perform high-speed data transmission. IMT-2000 mobile communication network services enable high-speed data transmission as well as voice communication through mobile terminals. In other words, mobile terminals can process both packet data and image data in an IMT-2000 network. Mobile terminals equipped with a camera or a TV receiver can also display motion pictures. Mobile terminals with an embedded camera can take pictures and display them as still or motion pictures. Also, photographed images can be stored or sent to another mobile terminal.

Mobile terminals offer an image search function that allows users to select and display a stored image. An image displayed on a mobile terminal can be enlarged/reduced in size. Also, a specific portion of the image can be selected and displayed in full screen.
In conventional mobile terminals, however, an image search, image enlargement/reduction or display of a selected portion of an image can be made only by pressing keys.

### SUMMARY OF THE INVENTION

Accordingly, the present invention has been made to solve the above-mentioned problems and/or disadvantages, and an object of the present invention is to provide a method for controlling the display of an image according to the movement of a mobile terminal.

Another object of the present invention is to provide a method for changing from one image to another according to the movement of a mobile terminal to enable a user to search images stored in the mobile terminal.

Still another object of the present invention is to provide a method for selecting a specific portion of an image with the movement of a mobile terminal and displaying the selected portion of the image.

In accordance with one aspect of the present invention for accomplishing the above objects of the present invention, a method for controlling the display of an image according to the movement of a mobile terminal is provided. The method comprises the steps of detecting a movement of the mobile terminal during display of an image, determining whether a predetermined period of time expires after detection of the movement, enlarging/reducing the image or searching images stored in the mobile terminal according to the direction of movement of the mobile terminal, if another movement is detected before the predetermined period of time expires, and displaying a portion of the image selected according to the direction of movement of the mobile terminal, if another movement is not detected before the predetermined period of time expires.

In accordance with another aspect of the present invention, a method for controlling the display of an image according to the movement of a mobile terminal is provided. The method comprises the steps of determining the direction of movement of the mobile terminal if the movement is detected at least two times within a predetermined period of time during display of an image, enlarging the image if the mobile terminal moves backward, and reducing the image if the mobile terminal moves forward.

In accordance with still another aspect of the present invention, a method for controlling the display of an image according to the movement of a mobile terminal is provided. The method comprises the steps of determining the direction of movement of the mobile terminal if the movement is detected at least two times within a predetermined period of time during display of an image, displaying an image previous to the one currently displayed if the mobile terminal moves left, and displaying an image next to the one currently displayed if the mobile terminal moves to the right.

In accordance with still another aspect of the present invention, a method for controlling the display of an image according to the movement of a mobile terminal is provided. The method comprises the steps of determining the direction of movement of the mobile terminal if the movement is detected once within a predetermined period of time during display of an image, moving up on the image to an upper portion by a predetermined number of pixels and displaying the portion if the mobile terminal moves upward, moving down on the image to a lower portion by a predetermined number of pixels and displaying the portion if the mobile terminal moves downward, moving to a left portion of the image by a predetermined number of pixels and displaying the portion if the mobile terminal moves left, and moving to a right portion of the image by a predetermined number of pixels and displaying the right portion if the mobile terminal moves to the right.

### BRIEF DESCRIPTION OF THE DRAWINGS

The above and other objects, features and advantages of the present invention will be more apparent from the following detailed description taken in conjunction with the accompanying drawings, in which:
FIG. I is a block diagram illustrating a mobile terminal according to an exemplary embodiment of the present invention;
FIG. 2 is a flow chart illustrating a process for controlling the display of an image according to the movement of a mobile terminal according to an exemplary embodiment of the present invention; and
FIGs. 3A through 3C are views for explaining the process in FIG. 2 according to an exemplary embodiment of the present invention.

Throughout the drawings, like reference numerals will be understood to refer to like parts, components and structures.

### DETAILED DESCRIPTION OF EXEMPLARY EMBODIMENTS

Hereinafter, certain exemplary embodiments of the present invention will be described with reference to the accompanying drawings. In the following description of the present invention, a detailed description of known functions and configurations incorporated herein will be omitted for clarity and conciseness

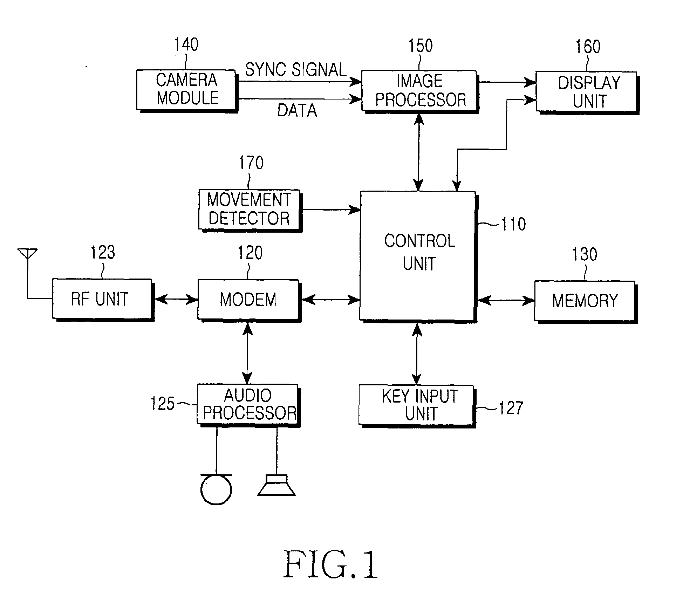

FIG. 1 is a block diagram illustrating a mobile terminal according to an exemplary embodiment of the present invention.

Referring to FIG. 1, a RF unit 123 performs a wireless communication function in the mobile terminal. The RF unit 123 comprises a RF transmitter for performing upward conversion and amplification of the frequency of a transmitted signal and a RF receiver for amplifying a received signal with low noise and performing downward conversion of the frequency of the signal. A modem 120 comprises a transmitter for coding and modulating a signal which will be transmitted and a receiver for demodulating and decoding a received signal. An audio processor 125 may comprise a codec having a data codec for processing packet data and an audio codec for processing an audio signal such as a speech signal. The audio processor 125 converts a digital audio signal received by the modem 120 into an analog signal and reproduce the analog signal through the audio codec. Also, the audio processor 125 converts an analog audio signal generated from a microphone into a digital audio signal through the audio codec and transfers the digital audio signal to the modem 120. The codec can be provided as an independent element or included in a control unit 110.

A memory 130 may comprise a program memory and a data memory. The program memory stores programs for controlling general operations of the mobile terminal. In accordance with an exemplary embodiment of the present invention, the program memory also stores programs for controlling the display of an image according to the movement of the mobile terminal. The data memory temporarily stores data generated during implementation of the above programs. The data memory also stores various images that can be displayed on the mobile terminal.

The control unit 110 controls overall operations of the mobile terminal. The control unit 110 may comprise the modem 120 and the codec. When a movement signal including a movement direction signal is output from a movement detector 170, the control unit 110 controls the display of an image according to the movement signal. If movement of the mobile terminal is detected at least two times within a predetermined period of time, the control unit 110 will enlarge/reduce the displayed image according to the direction of the movement. Also, if movement of the mobile terminal is detected at least two times within the predetermined period of time, the control unit 110 will display an image previous or next to the one currently displayed according to the direction of the movement, thereby enabling the user to search the stored images. In addition, if movement of the mobile terminal is detected once within the predetermined period of time, the control unit 110 will move the displayed image in order to select a portion of the image according to the direction of the movement and display the selected portion.

The movement detector 170 detects any movement of the mobile terminal and outputs a movement signal including a movement direction signal to the control unit 110. In an exemplary embodiment of the present invention, the movement detector 170 may comprise a 6-axis geomagnetic sensor, and the like.

A camera module 140 is used to photograph an object. The camera module 140 comprises a camera sensor for converting a photographed optical signal into an electric signal and a signal processor for converting an analog image signal photographed by the camera sensor into digital data. The camera sensor may comprise a charge coupled device (CCD) sensor and the signal processor may comprise a digital signal processor (DSP). The camera sensor and the signal processor can be either integrated into a single element or separated as independent elements.

An image processor 150 generates picture data for displaying an image signal output from the camera module 140. The image processor 150 processes image signals output from the camera module 140 in frames. Also, the image processor 150 adjusts the frame image data to conform to the features, such as size and resolution, which are displayable on a display unit 160, and outputs the adjusted frame image data. The image processor 150 comprises an image codec, and compresses the frame image data displayed on the display unit 160 in a preset manner or restores the compressed frame image data to the original frame image data. The image codec is selected from a variety of still or moving picture codecs, such as JPEG codec, MPEG4 codec or Wavelet codec. If the image processor 150 has an on screen display (OSD) function, it can output OSD data according to the displayed picture size under the control of the control unit 110.

The display unit 160 displays image data output from the image processor 150 or user data output from the control unit 110. The display unit 160 can be a LCD comprising a LCD controller, a memory for storing image data and a LCD device. When the LCD is a touch screen, it may serve as an input unit. In accordance with an exemplary embodiment of the present invention, the display unit 160 displays an image changing with the movement of the mobile terminal.

A key input unit 127 comprises alphanumeric keys for inputting numbers and characters and function keys for setting up various functions.

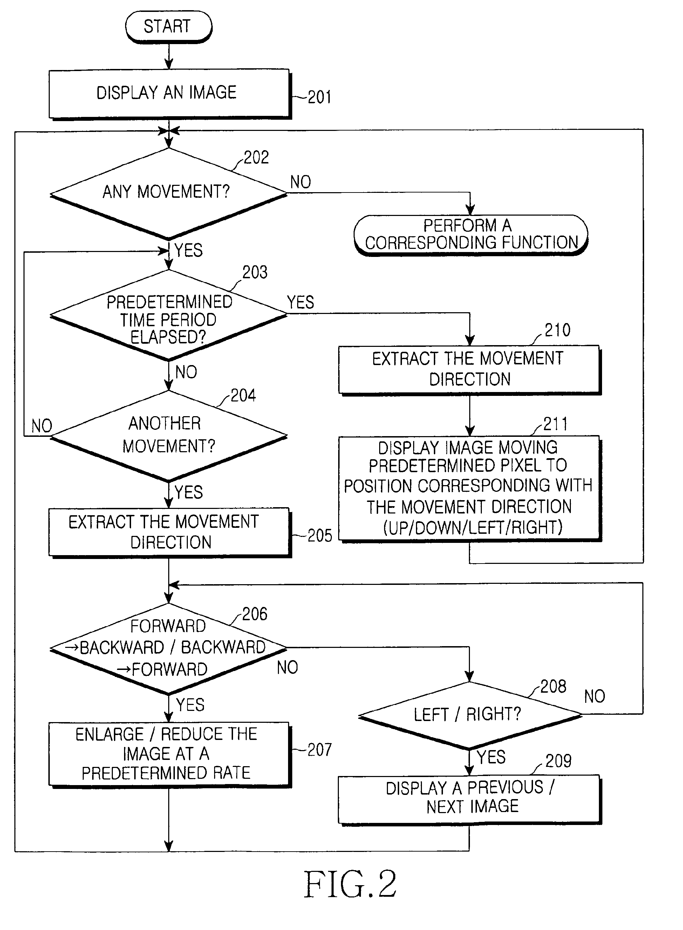

Hereinafter, the operations of the mobile terminal for controlling the display of an image according to the movement will be explained in detail with reference to FIG. 2.

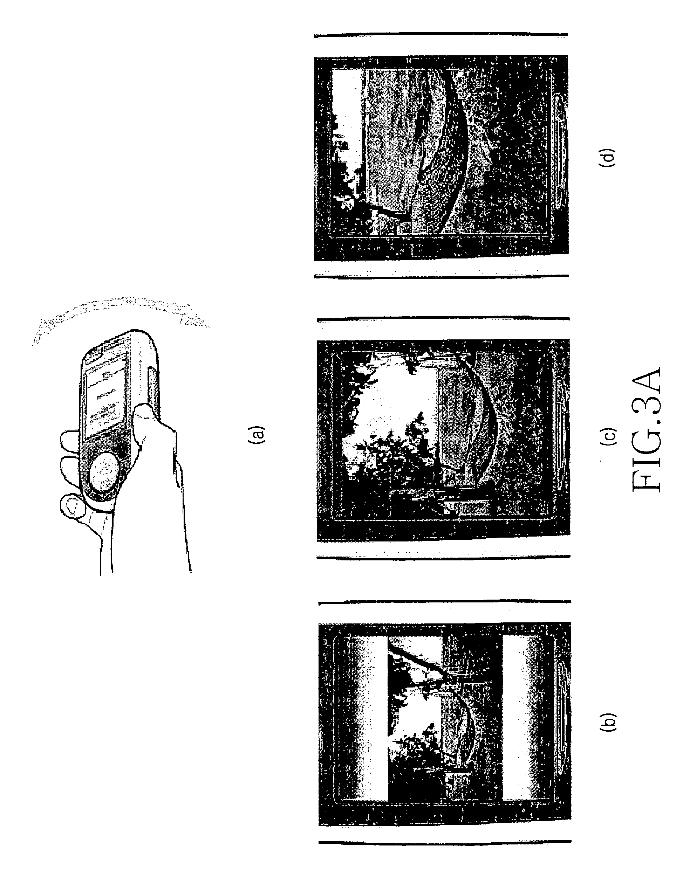

FIG. 2 is a flow chart illustrating a process for controlling the display of an image according to the movement of a mobile terminal. FIGs. 3A through 3C are views for explaining the process in FIG. 2. The mobile terminal may perform a function for enlarging/reducing an image or a function for searching stored images if a user moves it two times consecutively. The mobile terminal may also move a displayed image to select and display a specific portion of the image if the user moves the mobile terminal only once.

The image controlling process according to an exemplary embodiment of the present invention will be explained in greater detail with reference to FIGs. 1, 2 and 3 A through 3C.

Referring to FIG. 2, when the user selects one of the images stored in the memory 130, the control unit 110 detects the selection and displays the selected image on the display unit 160 in step 201. When a movement of the mobile terminal is detected during the display of the image, the control unit 110 then changes the current mode of the mobile terminal to a movement detection mode. The movement detection mode can be set as a default mode whenever an image is displayed.

When the user moves the mobile terminal in the movement detection mode, the movement detector 170 detects the movement in step 202 and outputs a corresponding movement signal to the control unit 110. Then the control unit 110 determines whether another movement signal is received from the movement detector 170 before elapse of a predetermined period of time.

If another movement signal is received from the movement detector 170 before elapse of the predetermined period of time, the control unit 110 will determine that the user has moved the mobile terminal two times consecutively within the predetermined period of time in steps 203 and 204, and extract the movement direction signal from the received movement signal in step 205.

If the movement direction signal extracted in step 205 corresponds to a backward/forward movement, the control unit 110 will determine the movement direction and activate an image enlargement/reduction mode.

In the image enlargement/reduction mode, when the extracted movement direction is backward, the control unit 110 detects the direction in step 206 and proceeds to step 207 in order to enlarge the image displayed in step 201 at a predetermined rate. If the user moves the mobile terminal forward during the display of the enlarged image, the control unit 110 will detect the movement in step 206 and proceed to step 207 in order to reduce the enlarged image at a predetermined rate and display the reduced image.

Alternatively, the image enlargement/reduction mode can be implemented in such a manner that the displayed image is enlarged at a predetermined rate when the mobile terminal is moved forward and reduced at a predetermined rate when the mobile terminal is moved backward. The rates of enlargement and reduction can be set by the user. In an exemplary embodiment of the present invention, the rates of enlargement and reduction may be 200% and 50%, respectively. Also, the displayed image is enlarged/reduced based on the center pixel value of the image.

FIG. 3Aa illustrates the enlargement/reduction of an image displayed on the mobile terminal. FIG. 3A (a) illustrates two consecutive movements of the mobile terminal in a forward/backward direction within a predetermined period of time.

When the user moves the mobile terminal that displays an image as shown in FIG. 3A (b) two times consecutively in a backward direction as illustrated in FIG. 3A (a), the displayed image is enlarged twice as illustrated in FIG. 3A (c). If the user moves again the mobile terminal that displays the enlarged image two times consecutively in the same (backward) direction, the image will then be enlarged four times as illustrated in FIG. 3A (d).

If the user moves the mobile terminal that displays the four times enlarged image as shown in FIG. 3A (d) twice consecutively in a forward direction, the displayed image will be reduced by half, in other words, two times greater than the normal size, as illustrated in FIG. 3A (c). If the user moves again the mobile terminal twice consecutively in the forward direction, the image will be reduced again to the normal size as illustrated in FIG. 3A (b).

If the movement direction signal extracted in step 205 corresponds to a leftward/rightward movement, the control unit 110 will determine the movement direction and activate an image search mode.

In the image search mode, when the extracted movement direction is left, the control unit 110 detects the direction in step 208 and proceeds to step 209 in order to display an image previous to the one currently displayed according to the order of storage of images in the memory 130 or the order designated by the user. When the extracted movement direction is right, the control unit 110 detects the direction in step 208 and proceeds to step 209 in order to display an image next to the one currently displayed according to the order of storage of images in the memory 130 or the order designated by the user.

Alternatively, the image search mode can be implemented to display an image previous to the one currently displayed when the mobile terminal is moved right and an image next to the one currently displayed when the mobile terminal is moved left.

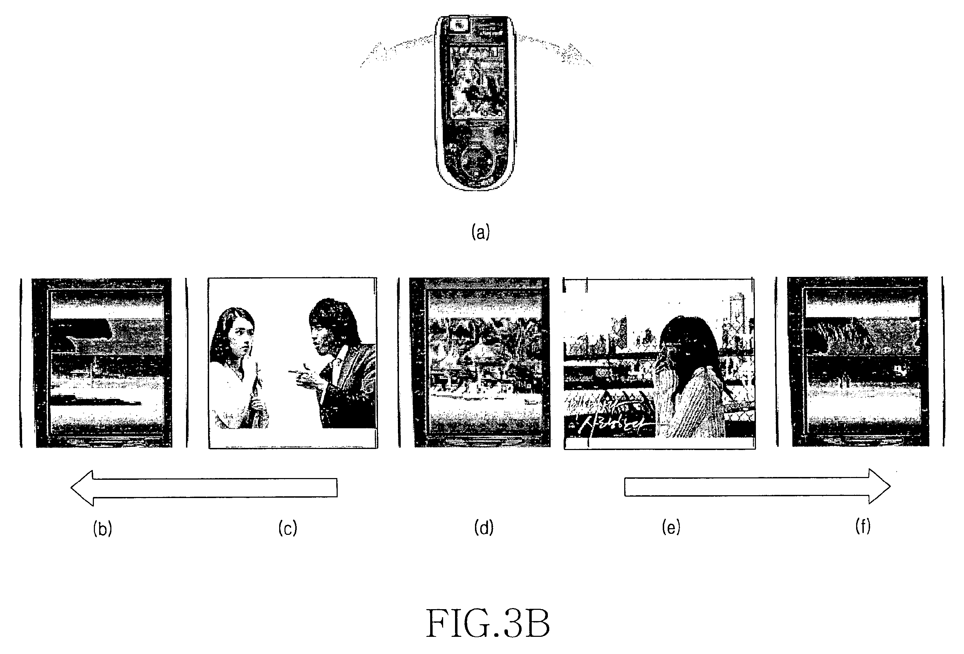

FIG. 3B illustrates the different images displayed according to the movement of the mobile terminal in the image search mode. FIG. 3B (a) illustrates two consecutive movements of the mobile terminal in a leftward/rightward direction within a predetermined period of time.

When the user moves the mobile terminal that displays an image as shown in FIG. 3B (d) two times consecutively in the left direction as illustrated in FIG. 3B (a), an image previous to the one currently displayed appears on the display unit as illustrated in FIG. 3B (c). If the user moves again the mobile terminal two times consecutively in the same direction, the previous image will then be displayed as illustrated in FIG. 3B (b).

If the user moves the mobile terminal that displays the image as shown in FIG. 3B (d) twice consecutively in the rightward direction, an image next to the one currently displayed will appear on the display unit as illustrated in FIG. 3B (e). If the user moves again the mobile terminal twice consecutively in the rightward direction, the next image will be displayed as illustrated in FIG. 3B (f).

If another movement signal is not received from the movement detector 170 before elapse of the predetermined period of time from the first detection of movement, the control unit 110 will recognize that the mobile terminal has moved once in step 203 and will activate an image movement mode. The image movement mode can be implemented only when an enlarged image is displayed on the display unit.

In the image movement mode, the control unit 110 extracts the movement direction signal from the movement signal in step 210. When the extracted movement direction is upward, the control unit 110 detects the direction and proceeds to step 211 in order to move up on the enlarged image by a predetermined number of pixels and display a portion of the image selected with the movement. If the user moves the mobile terminal upward once again during the display of the selected portion of the image on the display unit 160, the control unit 110 will move up again from the selected portion by the predetermined number of pixels and display an upper portion selected with the movement.

If the movement direction signal extracted in step 210 corresponds to a downward movement, the control unit 110 will determine the movement direction and will proceed to step 211 in order to move downward on the image by a predetermined number of pixels and display a portion of the image selected with the downward movement. If the user moves the mobile terminal downward once again during the display of the selected portion of the image on the display unit 160, the control unit 110 will move down again from the selected portion by the predetermined number of pixels and display a lower portion selected with the movement.

If the movement direction signal extracted in step 210 corresponds to a left movement, the control unit 110 will determine the movement direction and will proceed to step 211 in order to move left on the image by a predetermined number of pixels and display a portion of the image selected with the movement. If the user moves the mobile terminal left again during the display of the selected portion of the image on the display unit 160, the control unit 110 will move further to the left from the selected portion by the predetermined number of pixels and display a left portion selected with the movement.

If the movement direction signal extracted in step 210 corresponds to a right movement, the control unit 110 will determine the movement direction and will proceed to step 211 in order to move right on the image by a predetermined number of pixels and display a portion of the image selected with the movement. If the user moves the mobile terminal right again during the display of the selected portion of the image on the display unit 160, the control unit 110 will move further to the right from the selected portion by the predetermined number of pixels and display a right portion selected with the movement.

The predetermined number of pixels can be selected by the user or set as a default value.

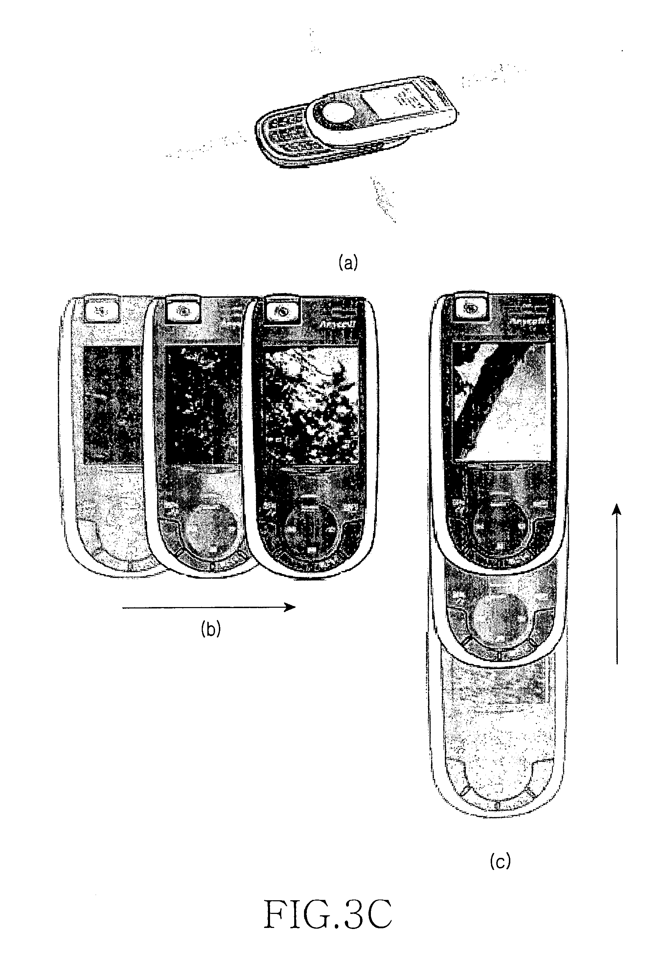

FIG. 3C illustrates the display of a portion of an image selected according to the direction of movement when the movement occurs only once within the predetermined period of time. FIG. 3C (a) illustrates a single movement of the mobile terminal in an upward, downward, leftward/rightward direction within the predetermined period of time.

Whenever the user moves the mobile terminal that displays an enlarged image once to the right within the predetermined period of time, the image is moved left by a predetermined number of pixels so that a right portion of the image can be displayed as illustrated in FIG. 3C (b). Also, whenever the user moves upward the mobile terminal that displays the enlarged image once within the predetermined period of time, the entire image is moved downward by a predetermined number of pixels so that an upper portion of the image can be displayed as illustrated in FIG. 3C (c).

The image enlargement/reduction, image search and image movement can be performed together.

As explained above, the present invention provides a method for controlling the display of an image according to the movement of the mobile terminal, which enables the user to easily enlarge/reduce an image, search images stored in the mobile terminal, or select and display a portion of an image by moving the mobile terminal.

Although exemplary embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for controlling the display of an image according to the movement of a mobile terminal, which comprises the steps of:
detecting a movement of the mobile terminal during display of an image;
determining whether a predetermined period of time expires after detection of the movement;
enlarging/reducing the image or searching images stored in the mobile terminal according to the direction of movement of the mobile terminal, if another movement is detected before the predetermined period of time expires; and
displaying a portion of the image selected according to the direction of movement of the mobile terminal, if another movement is not detected before the predetermined period of time expires.

2. The method according to claim 1, further comprising the step of determining whether the mobile terminal is in a movement detection mode.

3. The method according to claim 1, wherein the enlarging/reducing step comprises:
determining a movement direction of the mobile terminal;
enlarging the image when the mobile terminal moves backward; and
reducing the image when the mobile terminal moves forward.

4. The method according to claim 1, wherein the enlarging/reducing step comprises:
determining a movement direction of the mobile terminal;
reducing the image when the mobile terminal moves backward; and
enlarging the image when the mobile terminal moves forward.

5. The method according to claim 3, wherein said image is enlarged/reduced at a predetermined rate according to the direction of movement of the mobile terminal.

6. The method according to claim 4, wherein said image is enlarged/reduced at a predetermined rate according to the direction of movement of the mobile terminal.

7. The method according to claim 1, wherein the searching step comprises:
determining the movement direction;
displaying an image previous to the one currently displayed when the mobile terminal moves left; and
displaying an image next to the one currently displayed when the mobile terminal moves to the right.

8. The method according to claim 1, wherein searching step comprises:
determining the movement direction;
displaying an image next to the one currently displayed when the mobile terminal moves to the left; and
displaying an image previous to the one currently displayed when the mobile terminal moves to the right.

9. The method according to claim 1, wherein the displaying step comprises:
determining a movement direction of the mobile terminal;
moving up on the image to an upper portion by a predetermined number of pixels and displaying the upper portion of the image when the mobile terminal moves upward;
moving down on the image to a lower portion by a predetermined number of pixels and displaying the lower portion of the image when the mobile terminal moves downward;
moving left on the image to a left portion by a predetermined number of pixels and displaying the left portion of the image when the mobile terminal moves to the left; and
moving right on the image to a right portion by a predetermined number of pixels and displaying the right portion of the image when the mobile terminal moves to the right.

10. The method according to claim 9, wherein the displaying step is performed in an enlarged mode of the image.

11. A method for controlling the display of an image according to the movement of a mobile terminal, the method comprises:
determining the direction of movement of the mobile terminal if the movement is detected at least two times within a predetermined period of time during display of an image;
enlarging the image if the mobile terminal moves backward; and
reducing the image if the mobile terminal moves forward.

12. A method for controlling the display of an image according to the movement of a mobile terminal, the method comprises:
determining the direction of movement of the mobile terminal if the movement is detected at least two times within a predetermined period of time during display of an image;
reducing the image if the mobile terminal moves backward; and
enlarging the image if the mobile terminal moves forward.

13. A method for controlling the display of an image according to the movement of a mobile terminal, the method comprises the steps of:
determining the direction of movement of the mobile terminal if the movement is detected at least two times within a predetermined period of time during display of an image;
displaying an image previous to the one currently displayed if the mobile terminal moves to the left; and
displaying an image next to the one currently displayed if the mobile terminal moves to the right.

14. A method for controlling the display of an image according to the movement of a mobile terminal, the method comprises the steps of:
determining the direction of movement of the mobile terminal if the movement is detected at least two times within a predetermined period of time during display of an image;
displaying an image next to the one currently displayed if the mobile terminal moves to the left; and
displaying an image previous to the one currently displayed if the mobile terminal moves to the right.

15. A method for controlling the display of an image according to the movement of a mobile terminal, the method comprises the steps of:
detennining the direction of movement of the mobile terminal if the movement is detected once within a predetermined period of time during display of an image;
moving up on the image to an upper portion by a predetermined number of pixels and displaying the portion if the mobile terminal moves upward;
moving down on the image to a lower portion by a predetermined number of pixels and displaying the portion if the mobile terminal moves downward;
moving to a left portion of the image by a predetermined number of pixels and displaying the portion if the mobile terminal moves to the left; and
moving to a right portion of the image by a predetermined number of pixels and displaying the right portion if the mobile terminal moves to the right.
